# EUROPÄISCHE PATENTANMELDUNG

(11) **EP 0 640 276 A1**
(43) Veröffentlichungstag der Anmeldung: **01.03.1995**
(21) Anmeldenummer: 94111930.7
(22) Anmeldetag: 28.07.1994
(51) Int. Cl.: A01D 43/12

(54) **Verfahren und Maschinen/Gerätekombination zur Verfahrendsdurchführung, gebildet aus einem Mähdrescher, einem Bodenbearbeitungsgerät und einem Saatgut-Sägerät**

(30) Priorität: 30.07.1993 DE 4325469
(71) Anmelder: Güttler, Fritz, D-73235 Weilheim (DE)
(72) Erfinder: Maurer, Hermann, D-74595 Langenburg-Atzenrod (DE); Güttler, Fritz, D-73235 Weilheim-Teck (DE)

(57) **Zusammenfassung**

Verfahren zum Mähdrusch von Körnerfrüchten, zur gleichzeitigen Bodenbearbeitung, zur gleichzeitigen Aussaat von Saatgut in oder auf den Boden, zur gleichzeitigen Saatgutbedeckung mit Boden, zur gleichzeitigen Bodenrückfestigung im selben Arbeitsgang und eine Maschinen/Gerätekombination zur Verfahrensdurchführung, gebildet aus einem Mähdrescher (1), einem Bodenbearbeitungsgerät (4) mit Saaguteinarbeitungs- und Bodenrückfestigungswerkzeugen und einem Saatgut-Sägerät (5), wobei das Bodenbearbeitungsgerät (4) mit zugehörenden Arbeitswerkzeugen vorzugsweise im Bereich unterdem Mähwerktisch (1.1) oder/und dem Mähgutförderkanal (1.2) des Mähdreschers (1) und zusammen mit ersteren von der mähdreschereigenen Hebeeinrichtung vertikal heb- und senkbar mittels zweckerfüllend ausgebildet und angebrachten Konsolen (2) und Koppelteilen (3) angeordnet ist und sich annähernd über die ganze Schnittbreite des Mähdreschers (1) erstreckt und wobei weiter das Saatgut-Sägerät (5) vorzugsweise zwischen der vorderen und der hinteren Bearbeitungswerkzeugreihe des Bodenbearbeitungsgerätes (4) und mittels Verbindungsglieder (42) an letzterem angeordnet ist.

## Beschreibung

Die Erfindung hat nach dem Oberbegriff und nach dem Anspruch 1 ein Verfahren zum Mähdrusch von Körnerfrüchten, zur gleichzeitigen Aussaat von Saatgut in oder auf den Boden, zur gleichzeitigen Saatgutbedeckung mit Boden und zur gleichzeitigen Bodenrückfestigung im selben Arbeitsgang und eine Maschinen/Gerätekombination zur Durchführung des Verfahrens, gebildet aus einem Mähdrescher, einem Bodenbearbeitungsgerät und einem Saatgut-Sägerät zum Gegenstand, wobei die Bodenbearbeitung und die Aussaat neuen Saatgutes, z.B. von Zwischenfrüchten, zweckmässigerweise und vorzugsweise unter dem Mähwerktisch oder/und dem Mähgutförderkanal, auf jeden Fall aber vor dem Strohauswurf aus dem Auswurfschacht des Mähdreschers zu erledigen und abzuschließen vorgesehen ist.

Eine solche Verfahrensrealisierung bringt dem heute auf Kostenminimierung fixierten Landwirt erhebliche Einsparungen verschiedener Art.

Bekannt geworden ist in neuerer Zeit das einfachere Verfahren des Mähdrusches von Körnerfrüchten und das gleichzeitige Ausstreuen von Saatgut, vornehmlich von Zwischenfrüchten und zur Durchführung dazu eine sehr viel einfachere Maschinen/Gerätekombination, bestehend aus dem Mähdrescher und unter ihm untergebaut ein Saatgut-Sägerät meist in Form eines kleinen Zentrifugalstreuers, ohne wegabhängige Dosierung und angetrieben von einem kleinen Elektromotor. Dabei werden die Saatkörner auf die Bodenoberfläche aufgestreut, zwischen die Pflanzenstoppel hinein ehe das den Mähdrescher an seinem hinteren Ende verlassende Pflanzenstroh auf den Acker zurückfallen kann und dann die Ackerfläche, zumeist vom Mähdrescher relativ kurz gehäckselt, mehr oder weniger flächendeckend je nach Strohmengenanfall abdeckt.
In einem zweiten, separaten Arbeitsgang erfolgt mit einer geeigneten und meist in der Hebeeinrichtung eines Schleppers angebauten Bodenbearbeitungsmaschine und meist zapfwellenangetriebener Art eine oberflächennahe Einarbeitung des aufliegendenStrohteppiches mit den darunter ausgestreuten Samenkörner mit den beim Drusch ausgefallenden Frucht- und Unkrautsamen mit großem Kraft- Zeit- und Materialverschleißaufwand in den Boden. Die Aussaat neuer Samen könnte aber wie seither meist geschehen, genau so gut mittels eines auf dem betreffenden Bodenbearbeitungsgerät aufgesetzten Sägerätes zusammen mit den zweiten Arbeitsgang der Stroheinarbeitung erfolgen, aber bei einer einsetzenden und längeren Schlechtwetterperiode ist die Aussaat zusammen mit dem Mähdrescher insofern von Vorteil, daß bei genug dann vorhandender Feuchtigkeit auch die auf der Bodenoberflächen liegenden Samenkörner unter der Strohdecke gut genug keimen, Wurzeln schlagen und weiterwachsen und den wichtigen Zeitvorsprung nutzen, während die beste Wachstumszeit verloren ginge, müßte mit der Aussat bis zur möglichen Stroheinarbeitung gewartet werden.
Bei normalen Witterungsverlauf in der Mähdruschzeit oder gar in Trockenperioden ist der zeit-und kostenaufwendige zweite Arbeitsgang zum Einarbeiten des aufliegenden Strohteppiches unerlässlich, insbesonders, wenn der ackerbaulich so wertvolle und außerdem umweltschonende, grundwasserschützende Zwischenfruchtanbau anzustreben ist.
Aber auch hierbei können Tage um Tage verstreichen, ehe die oft mit dem Mähdrusch befaßte Person Zeit für den zweiten Arbeitsgang findet.

Die Erfindung hat es sich zur Aufgabe gemacht, um die witterungsbedingten und arbeitszeitlichen Unwägbarkeiten auszuschalten und um beträchtliche Kosten einzusparen, sowie ackerbaulichen und bodenschonen-Nutzen und die weiteren auf der Hand liegenden Vorteile auszuschöpfen, ein Verfahren zum Mähdrusch mit gleichzeitiger, die Schattengare optimal nutzender Bodenbearbeitung,die gleichzeitige Aussaat von Saatgut in oder auf den frisch bearbeiteten Boden, die gleichzeitige gute Samenbedeckung mit Boden und gute Bodenrückfestigung und dazu eine Maschinen/Gerätekombination zur Verfahrensdurchführung zu entwickeln, und dazu eine Maschinen/Gerätekombination geeigneter Art zu schaffen.

Die Aufgabe ist mit einer Maschinen/Gerätekombination der im Oberbegriff des Anspruches 1 genannten Art gemäß der Erfindung durch die Merkmale im Kennzeichnungsteil des Anspruches 1 gelöst.

Anhand eines Ausführungsbeispieles mit figürlichen Darstellungen bzw. Zeichnungen wird die Maschinen/Gerätekombination im folgenden dargestellt, näher beschrieben und erläutert.

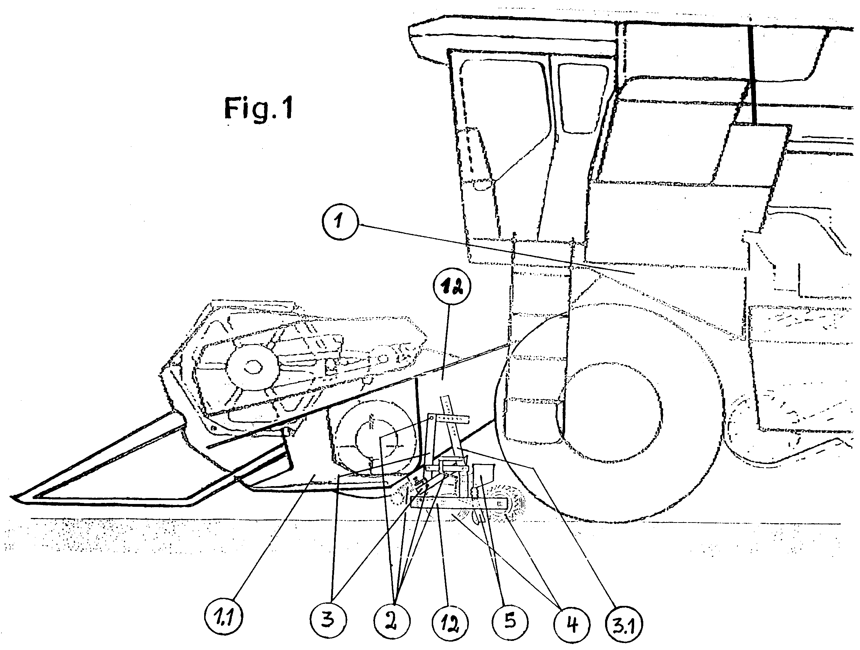

- Fig. 1: zeigt etwa die vordere Hälfte eines Mähdreschers (1) in Seitenansicht und darunter angeordnet etwa im Bereich des Mähwerktisches (1.1) und des Mähgutförderkanales (1.2) ein zugeordnetes Bodenbearbeitungsgerät (4) mit daran angeordneten Saatgut-Sägerät (5) zur Verfahrensdurchführung nach dem Oberbegriff und nach dem Anspruch 1

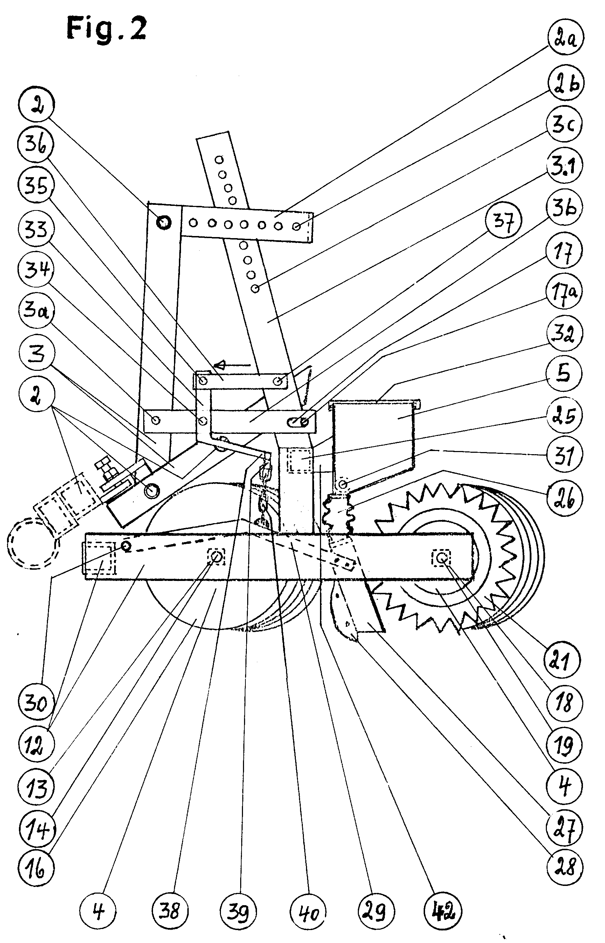

- Fig. 2: zeigt in Seitenansicht und in größerem Maßstab sowie alleingestellt das dem Mähdrescher zugeordnete Bodenbearbeitungsgerät (4) und das daran gekoppelte Saatgut-Sägerät (5) und dahinter das noch zum Bodenbearbeitungsgerät (4) gehörende walzenförmige Aggregat (21)

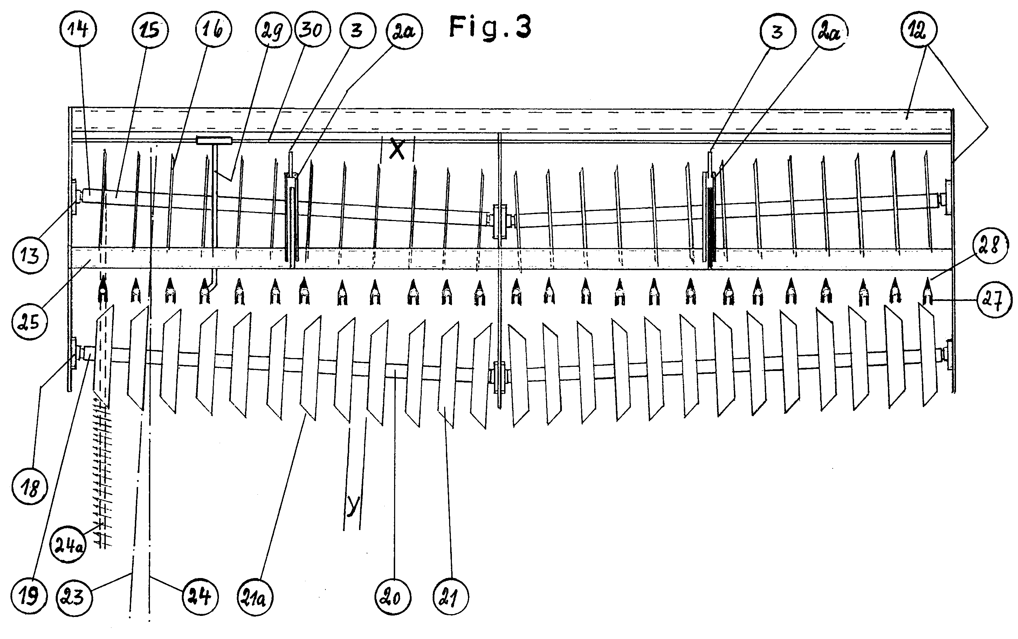

- Fig. 3: zeigt in Draufsicht das Bodenbearbeitungsgerät (4) mit dem dazwischen angeordnetem Saatgut-Sägerät (5), jedoch der Übersichtlichkeit halber ohne dessen Saatgutkasten.

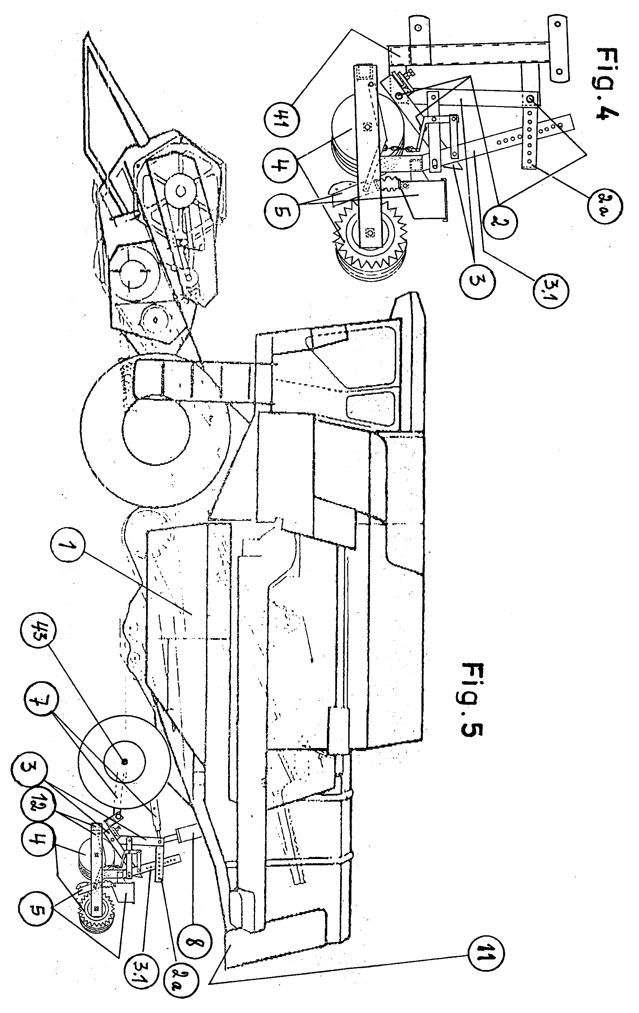

- Fig. 4: zeigt in Seitenansicht das gleiche wie in Fig.2, jedoch zusätzlich mit einem mittels Mähdrescher-baugleichen Konsolen (2) versehenen und mit diesen vorgekoppelten Anbaubock (41) für den Anschluß in die Hebeeinrichtung eines Schleppers.
- Fig. 5: zeigt in Seitenansicht das Bodenbearbeitungsgerät (4) mit dem zugeordneten Saatgut-Sägerät (5) jedoch ortsverändert am Mähdrescher angeordnet hinter der Hinterachse, aber vor dem Strohauswurfschacht (11), mittels eines geeignet ausgebildeten Koppelgestänges (7) und einer zweckentsprechend gestalteten Hebevorrichtung (8)

Unter einem Mähdrescher (1) ist vorzugsweise im Bereich des Schneidwerktisches (1.1) oder/und dem Mähgutförderkanal (1.2), die beide miteinander gekoppelt von der mähdreschereigenen Hebeeinrichtung vertikal heb-und absenkbar,sind an Konsolen (2) angreifende Koppelteile (3), (3.1) und von letzteren und Koppelarmen (3b) gehaltert ein Bodenbearbeitungsgerät (4) angeordnet, das beispielhaft und vorzugweise wie folgt gestaltet und aufgebaut ist:
Ein am unteren Ende der Koppelteile (3.1) angebrachter Geräterahmen (12) haltert in Drehlagern (13) mindestens eine Drehachse (14), die in Draufsicht zweckmäßigerweise leicht diagonal zur rechtwinkeligen Achse der Fahrtrichtung (24) und horizontal etwa parallel zur Bodenebene ausgerichtet ist. Auf der Drehachse (14) sind mittels Abstandhalter (15) Schneidscheiben (16) auf axialem Abstand (X) zueinander gehalten. Der Geräterahmen (12) ist mittels Koppelteile (3.1) im waagrecht und doppelschnittig ausgelegten Konsolen(2a) und gegenüber diesen vertikal beweglich mittels, Steckbolzen in der Lochreihe (3c) und horizontal beweglich in der Lochreihe (2b) fixierbar und in Zugstellung von Koppelarmen (3b) gehalten. Im hinteren Abschnitt des Geräterahmens (12) ist in weiteren Drehlagern (18) mindestens eine weitere Drehachse (19) gelagert, auf der ebenfalls im axialem Abstend (y) mittels Abstandhalter (20) walzenartige Arbeitselemente (21), vorzugsweise mit pultdachförmig ausgeformten Laufkranzquerschnitt (21a), der zudem gezackt ausgebildet sein kann, wie es in P 42 22 141.2-23 vorgeschlagen ist, aufgereiht sind. Die Drehachse (19) ist in Draufsicht gleichsinnig wie die Drehachse (14) leicht diagonal zur rechtwinkeligen Achse der Fahrtrichtung (24) und etwa parallel zur Bodenebene im Geräterahmen (12) eingestellt, sodaß die von der größeren Stirnfläche der Arbeitselemente (21) in Draufsicht auf den Boden projezierte Linie (23) im spitzen Winkel gegen dieFahrtrichtung (24) angestellt ist, wodurch die Elemente (21) mit ihrer pultdachförmigen Laufkranzfläche voraus bei der Vorwärtsdrehung leicht seitwärts radieren und so den in der von den Schneidscheiben (16)geöffneten Bodenrille (24a) von den Säscharen (27),(28) eingelegten Samen mit krümeligen Boden zudecken und gut andrükken und wobei sich die Elemente (21) gleichzeitig vorteilhaft auf ihrer pultdachförmigen und gezackten Laufkranzfläche hervorragend von selber reinigen. Gleichzeitig dienen die Arbeitselemente (21) den Schneidscheiben (16) als Tiefenführungswerkzeuge, selbst wenn erstere fremdbelastet werden, um z.B.vom Lagergetreide stammende Langstroh-Stoppel zu durchtrennen.
Um am Feldvorgewende oder Lagerfruchtstellen das wiederholt erzwungene Vor-und Rückwärtsstoßen des Mähdreschers mit zum Boden in Mähposition abgesenktem Mähwerk und dem daran angeschlossenem Bodenbearbeitungsgerät (4) und daran gekoppelten Säschare (27),(28) nicht zu deren Dauern-Verstopfungsursache und nicht zur Verbiegungsursache an den Säscharhebeln (29) werden zu lassen, wird eine automatisch funktionierende RückfahrSäschar-Aushebeeinrichtung wie folgt vorgeschlagen, die die Säschare (27),(28) aus dem Bodeneingriff aushebt, noch ehe das Bodenbearbeitungsgerät (4) und mit ihm das verbundene Saatgut-Sägerät (5) anfängt, vom Mähdrescher (1) rückwärts geschoben zu werden :
Ein Koppelhebelarm (3b) ist in einem etwa horizontal an der Konsole (3) angesetzten Drehzapfen (3a) angelenkt und weist in seinem anderen Ende ein Langloch (17) auf, durch das ein am Koppelteil (3.1) angesetzter Drehbolzen greift. Ein Kniehebel (33) ist mittels eines Drehzapfens (34) am Koppelarm (3b) angelenkt und an seinem oberen Ende mittels eines Gelenkbolzens (35) mit dem Hebel (36) verbunden, der an seinem anderen Ende mittels Gelenkbolzens (37) am Koppelteil (3.1) ist. Am unteren Ende (38) des Kniehebels (33) ist eine quer über die Rahmenbreite (12) gelegte Schiene (39) befestigt, an der für jedes Säschar (27),(28) und vorzugsweise an dessen Führungshebelarm (29) angreifend, eine Hebekette (40) angeordnet ist.
Sobald nun der Mähdrescher (1) mit zum Boden in Arbeitsposition abgesenktem Mähwerktisch (1.1) und Mähgutförderkanal (1.2) mit dem daran befestigten und gleichfalls in Arbeitsposition befindlichen Bodenbearbeitungsgerät(4) und dem Saatgut-Sägerät (5) sich rückwärts zu bewegen beginnt, bleibt das Bodenbearbeitungswerkzeug (4) mitsamt dem Sägerät (5) infolge seines Rollwiderstandes der Schneidscheiben (16) und der walzenförmigen Arbeitselemente (21) unbewegt stehen, ehe der vom Mähdrescher (1) über die Konsole (3) rückwärtsschiebende Koppelarm (3b) mit dem vorderen Langlochende (17) an den Bolzen (17a) kraftschlüssig ansteht und dann erst das Bodenbearbeitungsgerät mit Sägerät rückwärts bewegt. Vorher hat nämlich der am stehenbleibenden Koppelteil (3.1) angelenkte andere Hebel (36)den am zurückschiebenden Koppelarm (3b) über den Gelenkpunkt (35) angeschlossenen Kniehebel (33) nach vorne gedrückt, dessen um den Drehbolzen (34) im Kreisbogen nach oben schwenkendes Ende (38) mit angeschlossener Hubstange (39) über die Hebekette (40) den Säscharhebel (29) bzw. das Säschar (27),(28) aus dem Bodeneingriff ausgehoben hat, sodaß sie weder verbiegen noch verstopfen können. Bewegt sich der Mähdrescher (1) hingegen auch nur kurz wieder vorwärts, tritt augenblicklich der umgekehrte Vorgang ein, was logischerweise die Säschare (27),(28) wieder in Bodeneingriff auf die vorgegebene Saatablagetiefe absenkt.

Das Verfahren nach dem Oberbegriff des Anspruches 1 ist mittels der Maschinen/Gerätekombination nach dem Oberbegriff 1 und den Merkmalen im Kennzeichnungsteil des Anspruches 1 ohne weiteres praxisgerecht durchführbar. Damit sind aber auch einer weitergreifenderen Anwendung der einzelnen Komponenten der erfindungsgemäßen Dreierkombination weitere Möglichkeiten gegeben. So ist durch Lösen der Verriegelungsstecker aus den Konsolen (2) die Herausnahme des Bodenbeerbeitungsgerätes (4) mit oder ohne Saatgut-Sägerät (5) jederzeit im Bedarfsfalle möglich. So ist natürlich auch das Sägerät (5) alleine mittels geeigneter Zwischenstücke an die Konsolen (2) anbau-und verwendbar.
Darüber hinaus kann das dem Mähdrescher (1) entnommene Bodenbearbeitungsgerät (4) mit oder ohne Sägerät (5) durch die vorgesehene Vorkoppelung eines mit Mähdrescher-baugleichen Konsolen (2) versehenen Anbaubockes(41)für den Anschluß an die Hebeeinrichtung eines Schleppers losgelöst vom Mähdrescher (1) als selbständiges Schlepperanbaugerät bedarfsweise und außerhalb der Mähdruschzeit sinnvoll genutzt werden. WEiter ist es ohne weiteres möglich und vorgesehen, den Säkasten des Sägerätes (5) durch einen größeren, z.B. aus einer vorhandenen und gebrauchten Drillmaschine mitsamt deren Saatzuleitungen, die in die Säschare (27) einzuführen vorgesehen sind und deren Antriebs-sowie Dosierorgan zu ersetzen, sodaß evtl. die große Zahl verwendungslos gewordener Sämaschinen sinnvoll wiederverwertbar werden.

Die Erfindung beschränkt sich nicht auf eine bestimmte Bauausführung, sondern erstreckt sich auch auf andersartig gestaltete Bodenbearbeitungsgeräte, die zur Bildung der erfindungsgemäßen Maschinen/Gerätekombination nach dem Oberbegriff nach Anspruch 1 und den Merkmalen im kennzeichnenden Teil des Anspruches 1 dienen können, gleich, ob dabei die Bodenbearbeitung unter dem Mähdrescher rillen- bzw. bandförmig oder ganzflächig geschieht und die Saat ebenso geschieht, ob vor oder hinter den Bodenbearbeitungswerkzeugen.

## Patentansprüche

1. Verfahren zum Mähdrusch von Körnerfrüchten, zur gleichzeitigen Bodenbearbeitung, zur gleichzeitigen Aussaat von Saatgut in oder auf den Boden, zur gleichzeitigen Saatgutbedeckung mit Boden und zur gleichzeitigen Bodenrückfestigung im selben Arbeitsgang und eine Maschinen/Gerätekombination zur Durchführung des Verfahrens, gebildet aus einem Mähdrescher (1), einem Bodenbearbeitungsgerät (4) und einem Saatgut-Sägerät (5), **dadurch gekennzeichnet**, daß unter einem Mähdrescher (1), vorzugsweise unter dem Mähwerktisch(1.1) oder/und dem Mähgutförderkanal (1.2) des Mähdreschers und mit ihnen zusammen von der Mähdrescher-eigenen Hebeeinrichtung vertikal heb- und absenkbar, mittels zweckerfüllend ausgebildeten und angebrachten Konsolen (2) und Koppteilen (3), (3.1) ein mit seinem Geräterahmen (12) sich annähernd über die Schnittbreite des Mähdreschers (1) erstreckendes Bodenbearbeitungsgerät (4) zweckerfüllender Ausgestaltung und weiter ein in ebenfalls zweckerfüllender Art und Weise gestaltetes Saatgut-Sägerät (5), vorzugsweise mittel- oder unmittelbar mit dem Bodenbearbeitungsgerät (4) verbunden, zwecks Bildung einer der Maschinen/Gerätekombination: entsprechenden Einheit angeordnet ist/sind.

2. Verfahren und Maschinen/Gerätekombination zur Verfahrensdurchführung nach dem Oberbegriff und nach Anspruch 1, dadurch gekennzeichnet, daß das quer zur Fahrtrichtung (24) unter und am Mähdrescher (1) ausgerichtete und die Mähbreite annähernd überdeckende Bodenbearbeitungsgerät (4) beispielhaft und vorzugsweise wie folgt gestaltet und aufgebaut ist:
Der Geräterahmen (12) haltert in Drehlagern(13) mindestens eine Drehachse (14), die in Draufsicht leicht diagonal zur rechtwinkeligenAchse der Fahrtrichtung (24) und etwa parallel zur Bodenebene ausgerichtet ist und auf der mittels Abstandhalter (15) Schneidscheiben (16) auf axialem Abstand (X) zueinander gehalten sind. Der Geräterahmen (12) ist mittels Koppelteilen (3.1) in waagrecht und doppelschnittig ausgelegten Konsolenteilen (2a) und gegenüber diesen vertikal beweglich mittels Steckbolzen in der Lochreihe (3c) und horizontal beweglich in der Lochreihe (2b) fixierbar und in Zugstellung von Koppelarmen (3b) gehalten. Im hinteren Abschnitt des Geräterahmens (12) ist in weiteren Drehlagern (18) mindestens eine weitere Drehachse (19) gelagert, auf der ebenfalls im axialem Abstand (y) mittels Abstandhalter (20) walzenartige Arbeitselemente (21), vorzugsweise mit pultdachförmig ausgeformten Laufkranzquerschnitt (21a), der zudem gezackt ausgebildet sein kann, wie es in P 42 22 141.2-23 vorgeschlagen ist, aufgereiht sind. Die Drehachse (19) ist in Draufsicht gleichsinnig wie die Drehachse (14) leicht diagonal zur rechtwinkeligen Achse der Fahrtrichtung (24) und etwa parallel zur Bodenebene im Geräterahmen (12) eingestellt, sodaß die von der größeren Stirnfläche der Elemente (21) in Draufsicht auf den Boden projezierte Linie (23) im spitzen Winkel gegen die Fahrtrichtung (24) angestellt ist, wodurch die Elemente (21) mit ihrer pultdachförigen Laufkranzfläche voraus bei der Vorwärtsdrehung leicht seitwärts radierent angeordnet sind.

3. Verfahren und Maschinen/Gerätekombination zur Verfahrensdurchführung nach dem Oberbegriff und nach Anspruch 1 und 2, dadurch gekennzeichnet, daß das Saatgut-Sägerät (5) vorzugsweise im Freiraum zwischen der vorderen Drehachse (14) und der hinteren Drehachse (19) und vorzugsweise am Querbalken (25) des Bodenbearbeitungsgerätes (4) mit seinem Sägutkasten angeordnet ist und mit seinen Säscharen (27),(28) mittels eines auf einer im Vorderteil des Rahmens (12) angebrachten Welle (30) vertikal beweglich gelagerten Säscharhebelarmes (29).

4. Verfahren und Maschinen/Gerätekombination zur Verfahrensdurchführung, nach dem Oberbegriff und nach Anspruch 1-3, dadurch gekennzeichnet, daß dem Saatgut-Sägerät (5) vorzugsweise in den Boden eingreifende Säschare /27),(28) zugeordnet sind.

5. Verfahren und Maschinen/Gerätekombination zur Verfahrensdurchführung nach dem Oberbegriff und nach Anspruch 1 - 4, dadurch gekennzeichnet, daß die Säschare (27),(28) durch einfache Saatleitungen ersetzt sind, deren untere Öffnung senkrecht und nahe über oder in der geöffneten Bodenrille mündend angeordnet ist.

6. Verfahren und Maschinen/Gerätekombination zur Verfahrensdurchführung, nach dem Oberbegriff und nach Anspruch 1-5, dadurch gekennzeichnet, daß das Bodenbearbeitungsgerät (4) allein oder/und das Saatgut-Sägerät (5) mittels eines zweckerfüllenden Koppelgestänges (7) und einer entsprechend gestalteten Hebeeinrichtung (8) ortsveränderlich am Mähdrescher (1), z.B. hinter der Hinterachse (43) und evtl. an ihr befestigt, aber noch vor dem Strohauswurfschacht (11) angeordnet ist.

7. Verfahren und Maschinen/Gerätekombination zur Verfahrensdurchführung nach dem Oberbegriff und nach Anspruch 1-6, dadurch gekennzeichnet, daß das Bodenbearbeitungsgerät (4) allein oder/und das Saatgut-Sägerät (5) aus dem Mähdrescher (1) entnehmbar gestaltet und mit einem, mit baugleichen Konsolen (2) versehenem Anbaubock (41) ergänzbar zum Anschluß an die Hebeeinrichtung eines Schleppers vorgesehen ist.

8. Verfahren und Maschinen/Gerätekombination zur Verfahrensdurchführung nach dem Oberbegriff und nach Anspruch 1-7, dadurch gekennzeichnet, daß die Schneidscheiben (16) mit ihren Achsen,Lagern,Halterungen, sowie ihren Nebenaggregaten ersetzt sind durch ein an deren Stelle angeordnetes Zinkengerät bekannter Bauart, vorzugsweise nach P 43 13 941.8-23 modifiziert.

9. Verfahren und Maschinen/Gerätekombination zur Verfahrensdurchführung nach dem Oberbegriff und nach Anspruch 1-8, dadurch gekennzeichnet, daß den Zinken an ihrer Rückseite, senkrecht und nahe über der von den Zinken geöffneten Bodenrille, oder in der Bodenrille , eine mit ihrer unteren Öffnung mündende Saatleitung angeordnet ist.

10. Verfahren und Maschinen/Gerätekombination zur Verfahrensdurchführung nach dem Oberbegriff und nach Anspruch 1-9, dadurch gekennzeichnet, daß in den Zwischenraum jeweils zweier benachbarter Zinken, ein mit Eigenantrieb am Boden abrollender, evtl. sich im Boden verzahnender, oder mit Frendantrieb versehener, rotierend eingreifender Ausräumer angeordnet ist.
